# EUROPÄISCHE PATENTSCHRIFT

(11) **EP 3 017 683 B1**
(45) Veröffentlichungstag und Bekanntmachung des Hinweises auf die Patenterteilung: **05.07.2017**
(21) Anmeldenummer: 14192424.1
(22) Anmeldetag: 10.11.2014
(51) Int. Cl.: A01D 78/06

(54) **Bandrechen**
Side-delivery hay rake
Râteau-faneur à bandes

(43) Veröffentlichungstag der Anmeldung: 11.05.2016
(73) Patentinhaber: Kverneland Group Kerteminde AS, 5300 Kerteminde (DK)
(72) Erfinder: Gohl, Stefan, 78244 Gottmadingen (DE)
(74) Vertreter: Grünecker Patent- und Rechtsanwälte PartG mbB

(56) Entgegenhaltungen:
- EP-A1- 1 459 617
- EP-A1- 2 047 739
- DE-A1- 3 026 912
- DE-U1- 8 912 479
- US-A- 3 074 222
- US-A- 4 185 447

## Beschreibung

Die Erfindung betrifft einen Bandrechen gemäß Oberbegriff des Patentanspruchs 1.

Bei einem aus EP 20 47 739 A1 bekannten Bandrechen ist das Band ein relativ schmaler Keilriemen, an welchem die Zinken senkrecht abstehend außenseitig montiert sind. Das Band wird außenseitig von einer flächigen Abdeckung abgedeckt, in der Längsschlitze für die Zinken ausgespart sind, und an der sich Erntegut aufstaut. Der Bandrechen ist an ein handgeführtes Motorgerät angebaut. Die Förderleistung ist unbefriedigend. Da die Zinken über Zinkenwendeln verfügen, ist ihr Förderverhalten in der einen Laufrichtung des Bandes deutlich verschieden vom Förderverhalten in der anderen Laufrichtung.

Bei einem aus DE 1 934 817 B bekannten Bandrechen sind zwei Keilriemenschlaufen in Hochrichtung voneinander beabstandet auf Antriebstrommeln angeordnet, die über ein Getriebe und eine Gelenkwelle angetrieben sind. Die Zinken sind mit beabstandeten vertikalen Zinkenstäben an beiden Keilriemen drehbar gelagert, wobei ihre Arbeitsenden nach unten außen abgewinkelt abstehen. Die Zinken sind bei der Laufbewegung des Bandes derart gesteuert, dass sie sich im Umlenkbogen aus dem geförderten Gut zurückziehen. Der Bandrechen ist nur in einer Laufrichtung betreibbar, was beispielsweise am Feldrand oder entlang eines Anstiegs unzweckmäßig ist, weil dort ein Schwad unerwünscht ist. Bei größerem Erntegutanfall und höherer Fahrgeschwindigkeit neigt das Erntegut dazu, zwischen die Zinken einzudringen und sich festzusetzen, bis die Funktionsfähigkeit des Bandrechens gefährdet ist. Ferner ist die Mechanik zum Steuern der Zinken in den Umlenkbereichen aufwändig und schwer. Für zum Kleben neigendes Silage-Material ist der Bandrechen unzweckmäßig. Es bleibt unerwünscht viel Erntegut liegen.

Bei einem aus EP 14 59 617 A1 bekannten Bandrechen zur Schwadbildung sind als Zinken gebogene Stangen mit nach auswärts und unten abgewinkelten Arbeitsenden auf der Außenseite des nur schmalen Bandes fixiert. Der Bandrechen ist mit nur einer Laufrichtung des nach Art eines Förderbandes ausgebildeten Bandes betreibbar. Die über Gummiverbindungen an den Stangen angebrachten Arbeitsenden tendieren am Umlenkbogen des Bandes bei nachlassendem Widerstand des eigentlich nur bodennah geförderten Ernteguts dazu, Gutanteile in einer Peitschenbewegung unkontrolliert abzuschleudern.

Der Erfindung liegt die Aufgabe zugrunde, einen Bandrechen zu schaffen, der eine hohe und in jeder Laufrichtung die gleiche Förderleistung erbringt, und der einfach und bequem handhabbar ist.

Die gestellte Aufgabe wird mit den Merkmalen des Patentanspruchs 1 gelöst.

Da der Bandrechen mit entgegengesetzten Laufrichtungen des Bandes wahlweise betreibbar ist, kann das Material oder Erntegut nach Bedarf zu der günstigsten Seite gefördert und geordnet abgelegt werden.Das Band verhindert, dass Erntegut zwischen den Zinken ins Innere des Bandrechens eindringt und dessen Funktionsfähigkeit gefährdet. Die relativ große Höhe von mindestens etwa 20 cm des Bandes stellt sicher, dass bei relativ hoher Fahrgeschwindigkeit auch ein großer Erntegutanfall problemlos verarbeitet werden kann, so dass hohe kontinuierliche Förderleistungen in beiden Laufrichtungen gewährleistet werden. Es lässt sich auch Silage-Erntegut problemlos verarbeiten. Da sich die Zinken selbsttätig in die zur jeweiligen Laufrichtung passenden Arbeitsstellung allein durch die Umstellung der Laufrichtung einstellen, braucht der Schlepperführer hierfür nicht abzusteigen oder Werkzeuge einzusetzen. Obwohl die Zinken am Band stabil montiert sind, können sie bei Bedarf leicht gewechselt werden. Der Bandrechen zeichnet sich durch einen außerordentlich geringen Erntegutverlust und eine hohe Arbeitsleistung bei universeller Einsetzbarkeit aus.

Im Hinblick auf hohe Förderleistung ist es zweckmäßig, wenn jeder Zinken ein unteres abgewinkeltes Arbeitsende aufweist, vorzugsweise ein sogar zweifach abgewinkeltes Arbeitsende. Das Arbeitsende begünstigt durch den versetzten Angriffsbereich im Erntegut oder auf dem Boden auch die selbsttätige Umstellung allein durch die Umkehr der Laufrichtung des Bandes.

Zweckmäßig ist ferner der untere Rand des Bandes in etwa auf der Höhe des Arbeitsendes jedes Zinken positioniert. Eine Bodenfreiheit von nur etwa 50 mm reicht für den unteren Rand des Bandes aus, um Kollisionen mit dem Boden oder Objekten auf dem Boden zu vermeiden.

Bei einer zweckmäßigen Ausführungsform sind die Zinkenstäbe in quer über die Außenseiten der Trume verlaufenden, kanalförmigen, vorzugsweise durchgehenden, Taschen drehbar gelagert. Dabei sind die Zinken zweckmäßig als Drehstabfedern ausgebildet, die bei Auftreffen auf Hindernisse auszuweichen vermögen. Die Taschen könnten auch nur aus unteren und oberen Abschnitten bestehen und/oder direkt in das Band eingearbeitet sein. Im Falle durchgehender Taschen ist sichergestellt, dass kein Erntegut oder Schmutz in die Taschen eindringt und die Drehbarkeit der Zinkenstäbe erschwert.

Zweckmäßig ist ferner jede Arbeitsstellung durch einen in einer Drehrichtung wirkenden Anschlag definiert. Somit sind die Zinken in ihren Arbeitsstellungen stabil abgestützt, um die Bandlaufbewegung in das Erntegut zu übertragen.

Um in beiden Laufrichtungen die gleichen Förderleistungen und Arbeitsbedingungen für die Zinken und das Band sicherzustellen, sind die Arbeitsstellungen zweckmäßig symmetrisch zu einer zum Trum senkrechten Radialebene des Zinkenstabs.

Alternativ zu direkt in das Band eingearbeiteten Taschen für die Zinkenstäbe könnten die Taschen einstückig am Band außenseitig angeformt sein, oder angeklebt, angenietet oder angeschraubt. Angeschraubte Taschen erlauben sogar einen Wechsel im Falle einer Beschädigung oder Funktionsstörung. An der Außenseite des Bandes angeordnete Taschen verbessern die Förderleistung, da sie formschlüssig in das Erntegut eingreifen.

Um einerseits eine leichtgängige Verdrehung der Zinken sicherzustellen und andererseits die Reaktionskräfte aus dem Arbeiten der Zinken problemlos in das Band zu übertragen, enthalten die Taschen für jeden Zinkenstab drehfest eingesetzte Gleitlager, z.B. aus Stahl.

Ferner sind zweckmäßig die Zinkenstäbe am Band weitgehend gegen Axialbewegung relativ zum Band abgestützt.

Die Anschläge, die die beiden Arbeitsstellungen definieren, sind zweckmäßig am oberen Ende der Tasche vorgesehen, um den Drehstabeffekt der Zinkenstäbe über eine möglichst große Länge nutzen zu können. Vorzugsweise sind die Anschläge sogar am oder im oberen Gleitlager vorgesehen.

Konkret könnten die Anschläge in einem Durchgang mit unrundem Querschnitt beispielsweise im oberen Ende des Gleitlagers oder eines Ringflansches des Gleitlagers vorgesehen sein, und zwar für das ebenfalls mit einem unrunden Querschnitt ausgebildete obere Ende des Zinkenstabs. Der unrunde Querschnitt des oberen Endes des Zinkenstabs ist dabei kleiner als der Querschnitt des Durchgangs, so dass sich das obere Ende des Zinkenstabs nur über einen vorbestimmten Winkelbereich relativ zur Tasche jeweils bis auf Anschlag zu verdrehen vermag. Zweckmäßig werden hier Vierkant- oder Sechskant-Querschnitte verwendet, um mehrere Anlageflächen nutzen zu können.

Das Band ist zweckmäßig ein weitgehend zugfestes Elastomerband und kann, vorzugsweise, eine integrierte Faser- oder Gewebeverstärkung enthalten.

Zweckmäßig wird das Band hydraulisch angetrieben, vorzugsweise ausgehend von einer Schlepperhydraulik, und ist die Laufrichtung des Bandes zweckmäßig vom Schlepper aus umstellbar, so dass der Schlepperführer zum Umstellen der Laufrichtung weder abzusteigen braucht noch Werkzeuge einsetzen muss.

Zweckmäßig ist ferner das Band innenseitig zumindest hinter einem Trum abgestützt, um sich unter dem Druck des Ernteguts nicht einzuwölben oder zu verwinden.

Unter anderem zum Schutz des unteren Randes und der Arbeitsenden ist es zweckmäßig, wenn der Bandrechen Bodenlaufräder oder Kufen aufweist.

Schließlich kann es zweckmäßig sein, wenn im Band mindestens zwei Walzen angeordnet sind, von denen eine z.B. über einen umsteuerbaren Hydraulikmotor angetrieben wird. Besonders zweckmäßig sind die Walzen bombiert, so dass sich das Band beim Lauf nach außen wölbt und selbsttägig zentriert wölbt, d.h. weder herabsinkt noch hochsteigt. In Verbindung damit könnten die Zinkenstäbe zwischen den Gleitlagern in den Taschen ebenfalls eine leichte Biegung aufweisen, so dass sie am Umlenkbogen und Dank der Bombierung der Walzen eine vorübergehende Drehbewegung ausführen, bei der sie sich aus dem Erntegut gegen die Laufrichtung zurückbewegen, was der Schwadgüte zuträglich sein kann.

Alternativ könnte das Band auf zylindrischen Walzen durch innere, obere und untere Ränder geführt sein.

Eine mögliche Ausführungsform des Erfindungsgegenstandes wird anhand der Zeichnung erläutert. Es zeigen:
- Fig. 1: eine Vorderansicht eines Bandrechens,
- Fig. 2: eine Draufsicht auf einen unteren Teil des Bandrechens von Fig. 1,
- Fig. 3: eine schematische Seitenansicht des Bandrechens,
- Fig. 4: ein vergrößertes Detail in einem Schnitt, und
- Fig. 5: eine Draufsicht zu Fig. 4.

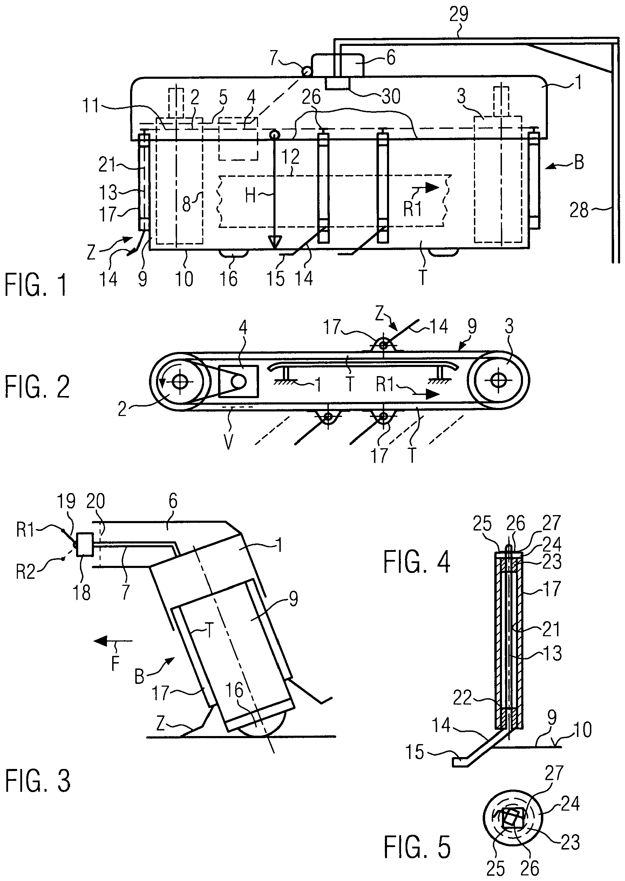

Ein Bandrechen B weist gemäß Fig. 1, 2 und 3 ein Maschinengestell 1 auf, in welchem zwei (oder mehrere) Walzen 2, 3 drehbar gelagert sind, derart, dass sich ihre parallelen Achsen von oben nach unten erstrecken. Die Umfänge der Walzen 2, 3 können, wie bei 8 angedeutet, bombiert sein. Die Walze 2 ist drehangetrieben, und zwar beispielsweise von einem Hydraulikmotor 4 und über ein Band oder eine Kette 5. Der Hydraulikmotor 4 könnte z.B. als Direktantrieb am oberen Walzenende montiert sein. Am Maschinengestell 1 ist eine Zugdeichsel 6 befestigt, mit der der Bandrechen B beispielsweise mit einem Schlepper (nicht gezeigt) gefahren wird. Zum Hydraulikmotor 5 verläuft eine Hydraulikleitung 7 von der nicht gezeigten Schlepperhydraulik.

Die Walzen 2, 3 befinden sich in einem endlosen nach Art eines Förderbandes ausgebildeten, allerdings aufgekantet eingebauten Band 9, beispielsweise aus weitestgehend zugfestem Elastomermaterial, gegebenenfalls mit einer Faser- und/oder Gewebeverstärkung, ähnlich einem Förderband. Die beiden Trume T des Bandes 9 erstrecken sich in Richtung der quer zur Laufrichtung R1 (in Fig. 1) nahezu senkrecht zum Boden, und zwar über eine Höhe H von mindestens 20 cm oder mehr. Der untere Rand 10 des Bandes befindet sich in der Nähe des Bodens, beispielsweise in einem Abstand von etwa 50 mm oberhalb des Bodens. Der obere Rand 11 des Bandes 9 kann unter dem Maschinengestell 1 abgedeckt sein. Zumindest ein Trum T kann innenseitig durch eine Abstützung 12 gegen Einbeulen oder Verwinden abgestützt sein. Die Abstützung 12 ist mit dem Maschinengestell 1 verbunden. Zum Arbeiten ist der Bandrechen B schräg angestellt (Fig. 3).

Zu Fig. 1 ist zumindest ein Schwadtuch 28 angedeutet, das z.B. über ein Gestänge 29 am Bandrechen B abgestützt ist. Zweckmäßig ist das Schwadtuch 28 sogar hydraulisch über einen Aktivator 30 vom Schlepper aus entsprechend verstellbar.

Das Band 9 ist mit einer Vielzahl Zinken Z bestückt, zwischen denen in Laufrichtung R1 Abstände vorliegen und die zueinander parallel sind. Jeder Zinken besteht aus einem geraden oder leicht gebogenen Zinkenstab 13 und einem unteren Arbeitsende 14, das gegenüber dem Zinkenstab 13 abgewinkelt ist, gegebenenfalls sogar zweifach, so dass ein weitgehend horizontal liegendes Ende 15 vorliegt. Der Bandrechen B weist ferner z.B. Bodenlaufräder 16 und/oder Kufen auf. Diese könnten an der Vorder- oder Hinterseite höhenverstellbar angeordnet sein.

Das Band 9 weist (Fig. 4) sich quer zur Laufrichtung R1 über die Höhe H jedes Trums T erstreckende Kanäle 21 für die Zinkenstäbe 13 auf. Die Kanäle 21 können in das Band 9 direkt eingeformt sein, oder werden von außen auf dem Band befestigten kanalförmigen Taschen 17 gebildet. Die Taschen 17 können auf das Band geklebt, genietet oder geschraubt sein.

Die oberen Enden der Zinkenstäbe 13 können aus den Taschen 17 vorstehen, wie bei 26 angedeutet. Die zweckmäßig wie Drehstabfedern wirkenden Zinkenstäbe 13 der Zinken Z sind in den Kanälen 21 in Achsrichtung festgelegt, so dass sie weder absinken noch hochsteigen können. Eine Faser- oder Gewebeverstärkung des Bandes 9 ist in Fig. 2 gestrichelt angedeutet.

In den Fig. 1 und 2 sind die Zinken Z in einer Arbeitsstellung passend zur Laufrichtung R1, d.h. die Arbeitsenden 14 sind nach außen und entgegengesetzt zur Laufrichtung orientiert. Gemäß Fig. 3 wird der Bandrechen B beim Arbeiten z.B. über die Deichsel 6 etwas schräg gestellt, so dass die Zinken Z des in Arbeitsfahrtrichtung F vorderen Trums T auf dem Boden oder knapp oberhalb des Bodens laufen, während die Zinken an der Hinterseite ausgehoben sind. Dank der Bombierung der Walzen 2, 3 bleibt das Band 9 beim Lauf in der Höhe selbsttätig zentriert. Da somit das Band 9 nach außen gewölbt ist, kann es zweckmäßig sein, die Zinkenstäbe 13 mit einer Biegung zu versehen.

Fig. 4 verdeutlicht in einer Schnittdarstellung die Lagerung eines Zinkens Z bzw. dessen Zinkenstabs 13 im Kanal 21.

Der Kanal 21 bzw. die Tasche 17 enthält ein unteres Gleitlager 22 und ein oberes Gleitlager 23 für den Zinkenstab 13. Die Gleitlager 22, 23 bestehen zweckmäßig aus Stahl. Der Zinken ist zweckmäßig nach Art einer Drehstabfeder beispielsweise aus Federstahl ausgebildet und in den Gleitlagern 22, 23 drehbar gelagert, wobei das Arbeitsende 14 aus dem Gleitlager 22 nach außen unten ragt. Am oberen Ende der Tasche 17, beispielsweise vereint mit dem Gleitlager 23, kann ein Ringflansch 24 vorgesehen sein, der an der Tasche 17 drehfest ist und einen Durchgang 25 mit unrundem Querschnitt enthält, den das obere Ende 26 des Zinkenstabs 13 durchsetzt. Das obere Ende 26 des Zinkenstabs 13 weist ebenfalls einen unrunden Querschnitt auf, der kleiner ist als der Querschnitt des Durchgangs 25, so dass der Zinkenstab 13 hier zwischen von den Querschnitten gebildeten Anschlägen eine begrenzte Drehbarkeit gegenüber dem Ringflasch 24 hat. Dies ist in Fig. 5 angedeutet, wo die beiden erwähnten Querschnitte Vierkantquerschnitte (alternativ Sechskantquerschnitte) sind. Um ein unkontrolliertes Absinken des Zinkens Z zu vermeiden, und dennoch eine leichte Demontage zum Zinkenwechsel zuzulassen, ist beispielsweise im oberen Ende 26 ein Splint 27 eingesetzt, der sich auf dem Ringflansch 24 oder einer Unterlegscheibe abstützt. Alternativ könnten auch Kontermuttern oder ähnliche Vorrichtungen benutzt werden, um den Zinken Z zwischen den Gleitlagern 22, 23 in axialer Richtung abzustützen. Die Anschläge zum Festlegen der Arbeitsstellungen könnten alternativ im Bereich des Arbeitsendes 14 vorgesehen sein. Das abgebogene Arbeitsende 14 legt sich beispielsweise an jeweils eine von zwei unten in das Band 9 integrierte Erhöhungen an (nicht gezeigt).

Fig. 3 deutet an, dass die Hydraulikleitung 7 mit einer Schlepperhydraulik 18 eines Schleppers 20 verbunden ist, an der ein Betätigungselement 19 dazu genutzt werden kann, vom Schlepper aus eine Umstellung von der Laufrichtung R1 in die entgegengesetzte Laufrichtung R2 vorzunehmen. Allein durch die Umstellung werden der Laufrichtung die drehbar gelagerten Zinken Z von der Arbeitsstellung, die beispielsweise zur Laufrichtung R1 passt, in die andere Arbeitsstellung, die zur entgegengesetzten Laufrichtung R2 passt, verstellt. Diese Verstellung resultiert aus dem Kontakt mit dem Boden oder dem Erntegut, wodurch bei der Bewegung des Bandes 9 ein Verstelldrehmoment auf den Zinken Z einwirkt, das ihn selbsttätig von der einen Arbeitsstellung in die andere Arbeitsstellung überführt.

Obwohl in Fig. 4 der Zinkenstab 13 gerade dargestellt ist, kann der Zinkenstab 13 eine Biegung aufweisen, ähnlich der Wölbung des auf den Walzen 2, 3 laufenden Bandes 9. Diese Biegung kann dazu genutzt werden, im Umlenkbogen, beispielsweise in Fig. 2 rechts, des Bandes 9 jedem Zinken Z eine Bewegung aufzuzwingen, bei der das Arbeitsende 14 etwas gegen die Laufrichtung zurückweicht, obwohl es am Umlenkbogen eine mechanisch bedingte Beschleunigung um die Achse der Walze 3 erfährt.

Als Transport- und/oder Einsatz-Strategien kommen neben dem erwähnten Zugdeichsel-Anbau ein Dreipunktanbau oder ein Zweipunkt-Unterlenker-Anbau in Frage. Der Bandrechen B könnte auch als ein Schwadelement von mehreren in einen Schwader eingegliedert werden.

## Patentansprüche

1. Bandrechen (B), der ein wahlweise in jeder Laufrichtung (R1, R2) weitgehend horizontal antreibbares, mit Zinken (Z) bestücktes Band (9) aufweist, dessen Trume (T) in Richtung quer zur Laufrichtung weitgehend senkrecht zum Boden orientiert sind, **dadurch gekennzeichnet, dass** sich die Trume (T) in der Höhe (H) durchgehend über mindestens 20 cm erstrecken, und dass die Zinken (Z) mit annähernd senkrechten Zinkenstäben (13) drehbar am Band (9) angebracht sind und durch Umstellen der Laufrichtung (R1, R2) selbsttätig zwischen beiden Laufrichtungen angepassten Arbeitsstellungen verstellbar sind.

2. Bandrechen nach Anspruch 1, **dadurch gekennzeichnet, dass** jeder Zinken (Z) ein unteres abgewinkeltes Arbeitsende (14) aufweist, vorzugsweise ein zweifach abgewinkeltes Arbeitsende (14).

3. Bandrechen nach Anspruch 2, **dadurch gekennzeichnet, dass** der untere Rand (10) des Bandes (9) in etwa auf der Höhe des Arbeitsendes (14) positioniert ist, vorzugsweise etwa 50 mm oberhalb des Bodens.

4. Bandrechen nach Anspruch 1, **dadurch gekennzeichnet, dass** die, vorzugsweise als Drehstabfedern ausgebildeten, Zinkenstäbe (13) in quer über die Trume verlaufenden, kanalförmigen, vorzugsweise durchgehenden, Taschen (17) drehbar gelagert sind.

5. Bandrechen nach Anspruch 1, **dadurch gekennzeichnet, dass** jede Arbeitsstellung durch einen in einer Drehrichtung des Zinkenstabs (13) zwischen dem Band (9) und dem Zinken (Z) wirkenden Anschlag definiert ist.

6. Bandrechen nach Anspruch 1, **dadurch gekennzeichnet, dass** die Arbeitsstellungen symmetrisch zu einer zum Trum (T) senkrechten Radialebene des Zinkenstabs (13) sind.

7. Bandrechen nach Anspruch 4, **dadurch gekennzeichnet, dass** die Taschen (17) außenseitig einstückig am Band (9) angeformt oder angeklebt, angenietet oder angeschraubt sind.

8. Bandrechen nach Anspruch 4, **dadurch gekennzeichnet, dass** jede Tasche (17) drehfest eingesetzte Gleitlager (22, 23) für den Zinkenstab (13) enthält.

9. Bandrechen nach Anspruch 1, **dadurch gekennzeichnet, dass** der Zinkenstab (13) am Band (9) weitgehend gegen Axialbewegungen abgestützt ist.

10. Bandrechen nach Anspruch 5, **dadurch gekennzeichnet, dass** die Anschläge am oberen oder unteren Ende der Tasche (17), vorzugsweise am oder im Gleitlager (23), angeordnet sind.

11. Bandrechen nach Anspruch 10, **dadurch gekennzeichnet, dass** die Anschläge in einem Durchgang (25) mit unrundem Querschnitt für den zumindest abschnittsweise mit einem unrunden, jedoch kleineren Querschnitt ausgebildeten Zinkenstabs (13) gebildet sind, vorzugsweise, von Vierkant- oder Sechskant-Querschnitten.

12. Bandrechen nach wenigstens einem der vorhergehenden Ansprüche, **dadurch gekennzeichnet, dass** das Band (9) ein weitgehend zugfestes Elastomerband ist, vorzugsweise mit integrierter Faser- oder Gewebeverstärkung (V).

13. Bandrechen nach Anspruch 1, **dadurch gekennzeichnet, dass** das Band (9) hydraulisch antreibbar ist, vorzugsweise über eine Schlepperhydraulik (18) und mit variierbarer Geschwindigkeit, und dass die Laufrichtung (R1, R2) von einem Schlepper (20) aus umstellbar ist.

14. Bandrechen nach Anspruch 1, **dadurch gekennzeichnet, dass** das Band (9) innenseitig abgestützt ist.

15. Bandrechen nach Anspruch 1, **dadurch gekennzeichnet, dass** der Bandrechen (B) Bodenlaufräder (16) oder Kufen aufweist, vorzugsweise vorder- oder hinterseitig und höhenverstellbar.

16. Bandrechen nach Anspruch 1, **dadurch gekennzeichnet, dass** im Band (9) mindestens zwei Walzen (2, 3) angeordnet sind, von denen eine über einen umsteuerbaren Hydraulikmotor (4) angetrieben ist, und dass, vorzugsweise, die Walzen (2, 3) bombiert sind und/oder das Band (9) integrierte, obere und untere Führungsränder aufweist.

17. Bandrechen nach wenigstens einem der vorhergehenden Ansprüche, **dadurch gekennzeichnet, dass** der Bandrechen (B) mindestens ein Schwadtuch (28) aufweist, vorzugsweise ein von einem Schlepper (20) aus hydraulisch zur der jeweiligen Laufrichtung (R1, R2) entsprechenden Seite des Bandrechens (B) versetzbares Schwadtuch (28).

## Claims

1. Band rake (B), comprising a band (9) equipped with tines (Z) being driveable substantially horizontally and selectively in each running direction (R1, R2), the flights (T) of which are oriented in a direction crosswise to the running direction and substantially perpendicular to the ground, **characterized in that** the flights (T) extend in height direction (H) continuously over at least 20 cm, and that the tines (Z) are arranged rotatably at the band (9) with approximately perpendicular tine rods (13) and are adjustable automatically by changing the running direction (R1, R2) between working position fitting to the respective of both running direction.

2. Band rake according to claim 1, **characterized in that** each tine (Z) has a lower angled working end (14), preferably a two-fold angled working end (14).

3. Band rake according to claim 2, **characterized in that** the lower edge (10) of the band (9) is positioned substantially at the elevation of the working end (14), preferably about 50 mm above the ground.

4. Band rake according to claim 1, **characterized in that** the tine rods (13) are, preferably, formed as torsion rod springs and a rotatably supported at the band (9) in channel shaped, preferably continuous, pockets (17) extending crosswise over the flights.

5. Band rake according to claim 1, **characterized in that** each working position is defined between the band (9) and the tine (Z) by a stop acting in one rotational direction of the tine rod (13).

6. Band rake according to claim 1, **characterized in that** the working positions are symmetric in relation to a radial plane of the tine rod (13), the radial plane being perpendicular to the flight (T).

7. Band rake according to claim 4, **characterized in that** the pockets (17) are formed unitarily in the outer side of the band (9) or are glued, riveted or screwed to the outer side of the band (9).

8. Band rake according to claim 4, **characterized in that** each pocket (17) contains plain bearings (22, 23) for the tine rod (13), the plain bearings being inserted in the pocket such that they are hindered to rotate.

9. Band rake according to claim 1, **characterized in that** the tine rod (13) is supported at the band (9) against substantial axial movements.

10. Band rake according to claim 5, **characterized in that** the stops are arranged at the upper or lower end of the pocket (17), preferably at or within the plain bearing (23).

11. Band rake according to claim 10, **characterized in that** the stops are formed in a passage (25) having non-circular cross section for the tine rod (13), the tine rod (13) being formed at least in sections with a non-circular, smaller cross section, preferably with square-cross section or hexagonal-section.

12. Band rake according to at least one of the preceding claims, **characterized in that** the band (9) is a widely substantially stretch resistant elastomeric band, preferably containing integrated fiber- or fabric-reinforcements (V).

13. Band rake according to at least one of the preceding claims, **characterized in that** the band (9) is drivable in hydraulic fashion, preferably via a tractor hydraulics (18) and with variable speeds, and that the running directions (R1, R2) can be changed from the side of a tractor (20).

14. Band rake according to claim 1, **characterized in that** the band (9) is supported at the inner side.

15. Band rake according to claim 1, **characterized in that** the band rake (B) has ground running wheels (16) or skids, preferably at the front side or the rear side and in height-adjustable fashion.

16. Band rake according to claim 1, **characterized in that** at least two rollers (2, 3) are arranged within the band (9), one of which is driven by a reversible hydraulic motor (4), and that, preferably, the rollers (2, 3) have convexly rounded surfaces and/or the band (9) has integrated upper and lower guiding edges.

17. Band rake according to at least one of the preceding claims, **characterized in that** the band rake (B), is equipped with at least one swath-cloth (28), preferably a swath-cloth (28) which can be dislocated hydraulically from the side of a tractor (20) and to each side of the band rake and corresponding to the respective chosen running direction (R1, R2) of the band (9).

## Revendications

1. Râteau-faneur à bande (B) comportant une bande (9) équipée de dents (Z), qui peut être entraînée dans une large mesure de manière horizontale, sélectivement dans chaque sens de marche (R1, R2), et dont les brins (T), dans la direction transversale au sens de marche, sont orientés dans une large mesure perpendiculairement au sol, **caractérisé en ce que** les brins (T) s'étendent, dans le sens de la hauteur (H), de manière continue sur au moins 20 cm, et **en ce que** les dents (Z) sont placées de manière rotative sur la bande (9) avec des barreaux de dent (3) sensiblement verticaux, et, par inversion du sens de marche (R1, R2), peuvent être déplacées automatiquement entre des positions de travail adaptées aux deux sens de marche.

2. Râteau-faneur à bande selon la revendication 1, **caractérisé en ce que** chaque dent (Z) présente une extrémité de travail inférieure coudée (14), de préférence une extrémité de travail (14) doublement coudée.

3. Râteau-faneur à bande selon la revendication 2, **caractérisé en ce que** le bord inférieur (10) de la bande (9) est positionné environ à hauteur de l'extrémité de travail (14), de préférence à environ 50 mm au-dessus du sol.

4. Râteau-faneur à bande selon la revendication 1, **caractérisé en ce que** les barreaux de dent (13), de préférence réalisés sous forme de barreaux élastiques rotatifs, sont montés rotatifs dans des goussets (17) en forme de canal, de préférence continus, s'étendant transversalement sur les brins de bande.

5. Râteau-faneur à bande selon la revendication 1, **caractérisé en ce que** chaque position de travail est définie par une butée agissant dans un sens de rotation du barreau de dent (13), entre la bande (9) et la dent (Z).

6. Râteau-faneur à bande selon la revendication 1, **caractérisé en ce que** les positions de travail sont symétriques par rapport à un plan radial du barreau de dent (13), qui est perpendiculaire au brin de bande (T).

7. Râteau-faneur à bande selon la revendication 4, **caractérisé en ce que** lesdits goussets (17) sont formés ou collés, rivetés ou vissés, d'un seul tenant, sur le côté extérieur de la bande (9).

8. Râteau-faneur à bande selon la revendication 4, **caractérisé en ce que** chaque gousset (17) renferme des paliers lisses (22, 23) pour le barreau de dent (13), qui y sont insérés de manière fixe en rotation.

9. Râteau-faneur à bande selon la revendication 1, **caractérisé en ce que** le barreau de dent (13) est dans une large mesure bloqué à l'encontre de mouvements axiaux sur la bande (9).

10. Râteau-faneur à bande selon la revendication 5, **caractérisé en ce que** les butées sont agencées à l'extrémité supérieure ou inférieure du gousset (17), de préférence sur ou dans le palier lisse (23).

11. Râteau-faneur à bande selon la revendication 10, **caractérisé en ce que** les butées sont formées dans un passage (25) à section transversale non ronde pour le barreau de dent (13) au moins partiellement doté d'une section transversale non ronde et plus petite, de préférence des sections transversales carrées ou hexagonales.

12. Râteau-faneur à bande selon l'une au moins des revendications précédentes, **caractérisé en ce que** la bande (9) est une bande en élastomère dans une large mesure résistante à la traction, de préférence à renfort de fibres ou de textile (V) intégré.

13. Râteau-faneur à bande selon la revendication 1, **caractérisé en ce que** la bande (9) peut être entraînée hydrauliquement, de préférence par l'intermédiaire d'une hydraulique de tracteur (18), en pouvant faire varier la vitesse, et **en ce que** le sens de marche (R1, R2) peut être inversé à partir d'un tracteur (20).

14. Râteau-faneur à bande selon la revendication 1, **caractérisé en ce que** la bande (9) est soutenue du côté intérieur.

15. Râteau-faneur à bande selon la revendication 1, **caractérisé en ce que** le râteau-faneur à bande (B) comporte des roues de marche au sol (16) ou des patins, situés de préférence du côté avant ou arrière, et réglables en hauteur.

16. Râteau-faneur à bande selon la revendication 1, **caractérisé en ce que** dans la bande (9) sont agencés au moins deux rouleaux (2, 3) dont l'un est entraîné par l'intermédiaire d'un moteur hydraulique (4) à inversion de sens, et **en ce que**, de préférence, les rouleaux (2, 3) sont bombés et/ou la bande (9) comporte des bords de guidage supérieur et inférieur intégrés.

17. Râteau-faneur à bande selon l'une au moins des revendications précédentes, **caractérisé en ce que** le râteau-faneur à bande (B) comporte au moins une toile d'andain (28), de préférence une toile d'andain (28) pouvant être déplacée hydrauliquement à partir d'un tracteur (20), vers le côté du râteau-faneur à bande (B) approprié correspondant au sens de marche respectif (R1, R2).
